# EUROPEAN PATENT APPLICATION

(11) **EP 2 868 241 A1**
(43) Date of publication of application: **06.05.2015**
(21) Application number: 14386025.2
(22) Date of filing: 07.10.2014
(51) Int. Cl.: A47J 29/00

(54) **Egg boiling appliance**

(30) Priority: 16.10.2013 GR 20130100589
(71) Applicant: Giannakopoulos, Nikos, 17564 Palaio Faliro, Attiki (GR)
(72) Inventor: Giannakopoulos, Nikos, 17564 Palaio Faliro, Attiki (GR)
(74) Representative: Kiortsis, Christina

(57) **Abstract**

Egg boiling appliance consisted of a sensor measuring the water temperature, an electronic calculation circuit, a size meter of the egg and a mechanism indicating egg's condition which provides information regarding the condition of the egg such as boiled, soft-boiled, hard boiled etc.

Also optional the appliance is possible to indicates information whether the egg is safe to be eaten as example when the bacterium of salmonella is destroyed.

## Description

The invention concerns an appliance indicating the boiling of an egg, which is consisted of a water temperature sensor, a size meter of the egg, an electronic circuit which performs calculations and an indicator of the egg's condition. The appliance could also be immersed in a cookware. In this case we will also need a cookware, like a pot. There can be also added more indications than the egg's boiling condition such as whether the egg has been boiling enough time to destroy the bacterium of Salmonella.

### Field of the Invention

The boiled egg is an essential part of our daily diet, usually at breakfast. There is a common argument about the 'three minutes' egg and in general the personal preferences, even whims of many people ,who wish their boiled egg in a very specific boiling point. The preferences of course differ, some prefer it soft-boiled, others medium and some others hard-boiled. This need today is confronted usually by timing the boiling duration. This mode cannot fully meet the need of boiling to the same extent with consistent and reproducible manner, because the cooking duration depends on several factors like the size of the egg,the latitude and the altitude at which boiling is conducted, the intensity of the heat supplied etc. For example, a cooking course which is suitable for a place near the sea is proved too short for an altitude of about 1000 meters, where 20 seconds more are required. Additionally the egg may contain germs or bacteria that require specific time in a high temperature to destroy them. The fact that consumer are unaware of the exact boiling temperature or the time that the egg is over a specific temperature makes the egg unsafe for consumption or forces the consumers to boil it for a longer time.

The problem is not faced even with the measurement of time that elapses from the moment the water starts boiling. This is not due to the fact that the boiling point of water depends on the altitude. When the heat source is low, the time that elapses until the water is boiled is much greater in relation to time which elapses in a provided high heat source since in the first case the egg is left too long at an elevated temperature before the water reach the boiling and therefore needs less time from the moment the water reaches the boiling point and on.

The issue is confronted by the present invention with an egg boiling appliance according to claim 1.

In the present invention with the term «Boiling Time» is meant the total time from placing the egg in the cookware and the installation of utensils in the stovetops and the simultaneous entry timing of the appliance regardless of whether the water has reached the boiling point or not.

### Description of the Figures

The figure shows a side view of an appliance according to the invention. With number 1 is depicted the indicator of the egg's condition, with number 2 the electronic calculation circuit, with number 3 an optional modular connection of the two parts of the appliance, with number 4 two moving parts (of course it is possible one being stable and the other mobile)in between, which adjusts the egg so as to measure the size of and with number 5 the water temperature sensor inside where the egg is boiling. The modular connection offers flexibility to users so as they can change the condition indication to a favorable one.

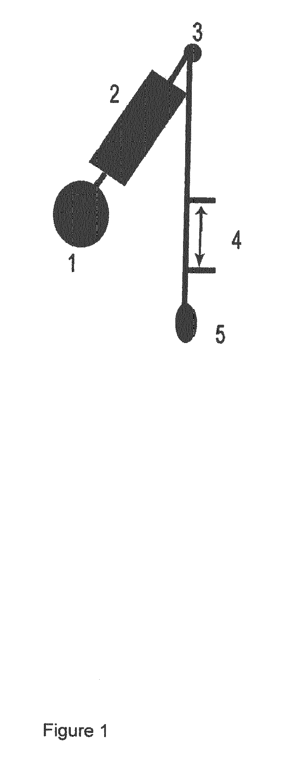

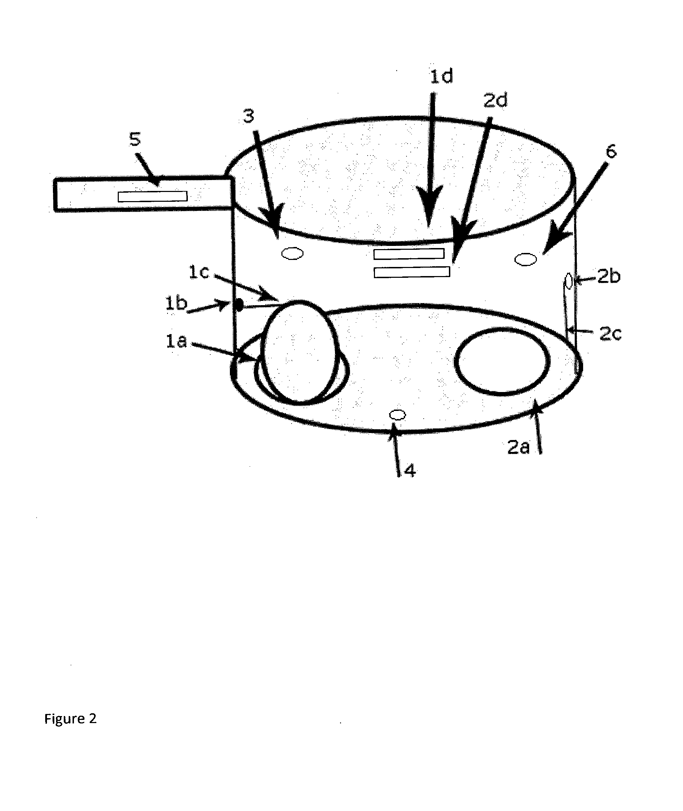

Figure 2 shows a cookware which incorporates the egg boiling appliance. The cookware contains 2 places for egg boiling. Number 1a and 1b show the places where the eggs are placed, 1b and 2b the arm that supports the size meter, 1c and 2c describes the size meter of the egg, 1d and 2d shows the indicator of the egg's condition (boiling condition), number 3 the start and the stop of the device operation, 4 the temperature sensor, 5 the calculating circuit and 6 the indication of safe consumption from the bacterium Salmonella.

### Description of the Invention

The egg boiling appliance is consisted of a temperature sensor, a size meter of the egg, an electronic circuit that makes the necessary calculations and a provision indicating the condition of the egg. The egg is placed between the two parts of the size meter which send a signal to the electronic calculation circuit to be informed of the size of the egg. The temperature sensor measures the temperature of the water and continuously sends signals to the calculating circuit each time the egg is placed in the kitchenware and the simultaneous entry timing of the appliance in order to be kept informed of the water temperature. In this way temperature and time sets are admeasured with specific gravity from the outset, irrespectively of whether the water has reached the boiling point or not. The calculating circuit of the appliance uses an algorithm which accepts as parameters the water temperature at any time the egg is placed in the kitchenware and the simultaneous start timing of the appliance, the cooking time and the size of the egg and in this way sends continuously to the indicating mechanism signals which characterize the condition of the egg. The indicator receives the signals from the calculation circuit and respectively shows the consumer the condition of the egg.

The egg boiling appliance according to the invention can be incorporated in a cookware, as for example a pot or a kettle.

When the egg boiling appliance according to the invention is not embedded in a cookware is consisted of two parts which are connected together by a modular connection. In the one part which immerses within the cookware, we find the temperature sensor and the size meter of the egg. In the other part, which is not immersed, is located the electronic calculation circuit and the indicator of the egg's condition , in order to be located outside of the cookware, be protected from the boiling temperature and the indication to be evident.

In a simple form the appliance is consisted of only one component containing the temperature sensor, the size meter of the egg, the electronic calculation circuit and the indicator of the egg's condition. In this case suitable materials are used (like heat insulation plastic)to protect adequately the components of the appliance and the indicator appliance is located in the upper part in order to be visible. This (one component) appliance can potentially alter collapsing along its length, to accommodate the depth of the cookware.

When the egg boiling appliance according to the invention is embodied in a kitchenware the temperature sensor is situated within the inner layer of the kitchenware, the size meter has a movable part in the inner layer which measures the egg in relation to the bottom of the cookware on which the egg is located, the electronic calculation circuit and the indicator of the egg's condition are located on the outer layer of the cookware in a noticeable position.

### Description of a preferable application of the invention

An independent (non-embodied in a kitchenware) egg boiling appliance is consisted of two parts which are connected together by a modular connection. In the one part which immerses within the cookware are found the temperature sensor and the size meter of the egg-boiling egg position. In the other part, which is not immersed, is located the electronic calculation circuit and the indicator of the egg's condition in order to be protected from the boiling temperature and be located outside of the cookware so as the indication to be evident. Both parts have approximately equal length and the connector is based on the edge of the cookware. In the connector point there is a small hook which helps in fastening on the rim of the cookware. The modular connection provides to the angle between the two parts the ability to vary according to the needs during use. The part within the cookware alters collapsible along its length to accommodate the depth of the cookware. The egg is placed in the meter size which sends a signal to the electronic calculation circuit which informs for the size of the egg. The temperature sensor measures the growth rate of water's temperature in relation to the time reaching the boiling temperature, water's temperature in which the egg is boiling and sends signals to the electronic temperature circuit of water and time from the moment the egg is placed in the cookware and the simultaneous start timing from the appliance. The temperature sensor continuously updates the calculation circuit of the appliance runs an algorithm which takes in as parameters the water temperature, the boiling time and the size of the egg and thus automatically sends to the indicator of the appliance signals which characterize the condition of the egg. The algorithm considers as initial temperature of the egg room temperature of about 19 C°. The indicator receives the signals from the calculation circuit and respectively shows the consumer the egg's condition.

In this example there is also indication as to when the egg is safe for consumption from the bacterium of Salmonella. When the temperature of the water rises over a specific temperature then the time starts counting until it's fully pasteurized from the bacterium of Salmonella and there is a corresponding indication

A simple algorithm is described below.

We divide the temperature every 5° C and we give tare weight to every group of 5° C. We measure temperature of over 40°C. I consider are weights for every group of 5°C as shown:
40°C -45°C ->0.2, 45°C -50°C ->0.25, 50°C -55°C ->0.3, 55°C -60°C ->0.35, 60°C-65°C ->0.4, 65°C -70°C ->0.45, 70°C -75°C ->0.5, 75°C -80°C ->0.55, 80°C -85°C->0.7, 85°C -90°C ->0.8, 90°C -95°C ->0.9, 95°C -100°C ->1.0. The shorter the temperature intervals the more accurate the results will be. Assumet the time for every temperature interval θᵢ with tare weight bᵢ Additionally we calibrate size intervals of the egg d and we set a price at each calibration. The system calculates the result (t₁ * b₁ + t₂ * b₂ + tᵢ* bᵢ)*d. Depending on the price of the result we are informed about the egg's condition (uncooked or boiled). Moreover considering that a bacterium is destroyed in temperatures higher than 75°C then the algorithm counts the size of the egg d, corrects the differential temperature of the egg's interior from water's temperature and provides an indication when the egg is safe from the bacterium.

It is obvious for a technician that several variations are possible for the egg boiling appliance which fall within the scope of protection of the appliance such as the prediction of the capability of boiling simultaneously two (or more) eggs and respectively two or more indications or for example the ability to entry a selective initial egg temperature (room temperature 19 C° or fridge's temperature 5 C°) or for example the measurement of two dimensions of the egg as height and diameter with the same or different gauge.

## Claims

1. Egg-boiling appliance, **characterized in that** it is consisted of a water temperature sensor, an electronic calculation circuit of the egg's condition, a size meter of the egg and an indicator of the egg's condition and by the fact that it depicts any time on the indicator the condition of the egg according to the calculations of the electronic circuit depending on time, egg's size and water's temperature.

2. Egg boiling appliance according to claim 1, **characterized in that** it is immersed properly in a cookware.

3. Egg boiling appliance according to claim 1, **characterized in that** it is consisted of two parts which are connected together by a modular connection where in the one part which is immersed in the water is found the water temperature sensor and in the other part which is outside the cookware is found the electronic calculation circuit and the indicator of the egg's condition.

4. Egg boiling appliance according to claim 3, **characterized in that** the part that is immersed in the water alters telescopically along its length.

5. Egg boiling appliance according to claim 1, **characterized in that** it is consisted of one part of which one section is immersed in the water inside the cookware and another section emerges above the cookware(and of course above the level of the water) so that it can be noticeable.

6. Egg boiling appliance according to claim **1,characterized in that** it is altered telescopically along its length.

7. Egg boiling appliance according to claim 1, **characterized in that** it consists programmed transmission of audio signals.

8. Egg boiling appliance according to claim 1 and 2 **characterized in that** it provides additional information beyond the condition of the egg like information as to when the product is safe from the bacterium of Salmonella.

9. Calculating method of the egg's condition while boiling **characterized in that** it is calculating through an algorithm, in an electronic processor, the egg's conditionusing the data of the initial temperature of the egg, the water's temperature every moment from the beginning of the procedure, the egg's size and the boiling time.
